# EUROPÄISCHE PATENTSCHRIFT

(11) **EP 0 778 165 B1**
(45) Veröffentlichungstag und Bekanntmachung des Hinweises auf die Patenterteilung: **22.12.1999**
(21) Anmeldenummer: 96117226.9
(22) Anmeldetag: 26.10.1996
(51) Int. Cl.: B60D 1/18

(54) **Zugmittel**
Tensioning device
Dispositif de tension

(30) Priorität: 05.12.1995 DE 29519223 U
(43) Veröffentlichungstag der Anmeldung: 11.06.1997
(73) Patentinhaber: SPANSET INTER AG, CH-8618 Oetwil am See (CH)
(72) Erfinder: Panhausen, Willi, 52538 Gangelt (DE)
(74) Vertreter: Tergau, Enno, Dipl.-Ing.

(56) Entgegenhaltungen:
- DE-A- 2 836 458
- DE-A- 2 841 603
- DE-A- 2 910 910
- DE-B- 1 117 399
- DE-U- 1 611 210
- DE-U- 1 886 790
- DE-U- 1 996 365
- DE-U- 7 640 083
- FR-E- 80 445

## Beschreibung

Die vorliegende Erfindung betrifft ein Zugmittel gemäß dem Oberbegriff des Anspruchs 1. Derartige Zugmittel sind üblicherweise als Seil, Kette, textiles Band oder textile Rundschlinge ausgestaltet, wobei sich die vorliegende Erfindung auf sämtliche Arten und Ausführungsformen von Zugmitteln bezieht. Die erfindungsmäßigen Zugmittel können entweder im stationären Betrieb eingesetzt werden. Hierbei ist die Zugeinrichtung dann eine stationäre Zugmaschine oder ein Ziehapparat und das Zugobjekt eine zu versetzende Last. Ebenso ist der Einsatz von Zugmitteln im mobilen Betrieb bekannt. Hierbei bildet ein Fahrzeug die Zugmaschine. An die Zugmaschine kann ein weiteres Fahrzeug oder ein Anhänger angekoppelt sein.

Beim Zugmittelbetrieb ist es möglich, daß das unter Spannung stehende Zugmittel infolge von Überlastung reißt. In diesem Fall entspannt sich das Zugmittel schlagartig und setzt plötzlich eine große Energiemenge frei. Infolge der freiwerdenden Energie ist es möglich, daß das Zugmittel seitlich unkontrolliert ausschlägt und in seiner Umgebung Schäden, schlimmstenfalls Verletzungen an Personen, verursacht.

Aus DE-U-7 810 362 ist eine Zugfeder zur Kraftübertragung zwischen einer Garagenwand und dem zugeordneten Garagentor bekannt. Diese Zugfeder ist von einem Schutzelement radial umgeben, um bei einem Brechen der Zugfeder Sachen und Personen vor Beschädigungs- und Verletzungsgefahren zu schützen. Das aus zwei sich einander überlappenden Rohren bestehende Schutzelement ist unmittelbar an der Zugfeder selbst befestigt. Bei einem Bruch der Zugfeder im axial mittleren Bereich dehnt sich das Schutzelement aufgrund seiner Längsverschieblichkeit auf eine größere Länge als die Länge der Zugfeder aus und bewirkt aufgrund der gegenseitigen Überlappung der beiden Rohre eine axiale Führung der brechenden Zugfeder. Spätestens bei einem Bruch der Zugfeder im Bereich ihrer Federenden ist das Schutzelement jedoch hinsichtlich dieser Führungseigenschaften völlig funktionslos. In diesem Fall schlägt die Zugfeder seitlich unkontrolliert aus und verursacht in seiner Umgebung trotz des vorhandenen Schutzelementes Schäden an Personen und Gegenständen.

Der Erfindung liegt die Aufgabe zugrunde, die beim Reißen des Zugmittels entstehende Beschädigungsgefahr für in der Nähe befindliche Gegenstände bzw. die Verletzungsgefahr für in der Nähe stehende Personen zu reduzieren.

Diese Aufgabe wird durch die Merkmalskombination des Anspruchs 1 gelöst. Die Unteransprüche beinhalten zweckmäßige Weiterbildungen der Erfindung.

Zwar ist aus DE-U-76 40 083 ein Seil, insbesondere ein Abschleppseil für Kraftfahrzeuge, bekannt, das zur Erzielung einer Rückdämpfung und eines Abstandsausgleichs zwischen schleppendem und geschlepptem Fahrzeug aus einem dehnbaren ersten Seilelement sowie aus einem dessen Dehnbarkeit begrenzenden zweiten Seilelement aufgebaut ist. Allerdings werden die beiden Seilelemente nicht unabhängig voneinander, sondern über diesen gemeinsame und beidendseitig des Abschleppseils vorgesehene Abschlepphaken oder Schäkeln an entsprechenden Abschleppösen der Fahrzeuge angebracht.

Demgegenüber besteht der Grundgedanke der Erfindung in der selbständigen Befestigung eines Führungselementes an der Zugeinrichtung bzw. am Zugobjekt. Die selbständige Befestigung des Führungselementes an der Zugeinrichtung bzw. dem Zugobjekt gewährleistet immer eine gleichgute Führung des auseinanderreißenden Zugmittels unabhängig von der Position der Rißstelle. Dadurch bietet das erfindungsgemäße Schutzelement eine im Vergleich zum Stand der Technik höhere Sicherheit gegen Beschädigungs- und Verletzungsgefahren.

Das Führungselement ist hierbei auf eine größere Länge ausdehnbar als das Zugmittel selbst. Diese größere Ausdehnbarkeit resultiert entweder daraus, daß das Führungselement von Haus aus eine größere Länge aufweist als das Zugmittel oder daß das Führungselement federelastisch reversibel oder irreversibel auf eine die Länge des Zugmittels übersteigende Länge ausdehnbar ist.

Im Falle des Zugmittelausfalls durch einen Riß führt das Führungselement die Teile des Zugmittels. Infolge dieser Führung kommt es zu einer kontrollierten Bewegung des Zugmittels und gleichzeitig zu einem gelenkten Abbau der schlagartigen auftretenden Spannungsenergie unabhängig von der Position der Rißstelle entlang der Zugmittellängsrichtung. Das Führungselement vernichtet hierbei die schlagartig auftretende Spannungsenergie durch Reibung der am Führungselement entlanggleitenden Zugmittelteile.

In zweckmäßiger Ausgestaltung der Erfindung bildet ein - je nach Ausführungsform unterschiedlicher - Schutzschlauch das Führungselement. Dabei ist der Schutzschlauch ein vom Zugmittel separates Teil, der entsprechend dem Zugmittel an den Zugmittelanschlußteilen angeschlagen ist. Befestigungsschlaufen dienen hierbei zum Einhängen des Schutzschlauchs an den Zugmittelanschlußteilen. Durch diese selbständige Befestigung des Schutzschlauchs ist gewährleistet, daß der Schutzschlauch auch beim Zugmittelausfall seine Führungseigenschaften unverändert und vollständig beibehält.

In einer Ausführungsform ist der Schutzschlauchs durchgehend. Dieser durchgehende Schutzschlauch weist eine größere Eigenlänge auf als das Zugmittel. Bei intaktem Zugmittel ist die Länge des Schutzschlauchs dadurch an die Länge des Zugmittels angepaßt, daß der Schutzschlauch an mehreren Stellen gefalzt ist. Das Schutzschlauchmaterial ist also gewissermaßen zusammengerafft zur Bildung eines Materialreservoirs. Nach dem Reißen des Zugmittels kann der Schutzschlauch dann zunächst auf seine vollständige Eigenlänge expandieren, so daß die Teile des gerissenen Zugmittels weiterhin im Schutzschlauch einliegen und darin sicher geführt sind. Vorteilhaft in diesem Zusammenhang ist die Verwendung eines flexiblen, federelastisch dehnbaren Schutzschlauchmaterials. Hierfür bietet sich insbesondere Kunststoff oder textile Web- bzw. Flechtware an. Diese Dehnbarkeit in Kombination mit der vorgegebenen Überlänge führt dazu, daß die Längenänderung des Schutzschlauchs beim Zugmittelausfall in jedem Fall so groß ausfällt, daß ein zusätzliches Reißen des Schutzschlauchs wirksam verhindert ist und daß auf diese Weise die Führungseigenschaften des Schutzschlauchs in jedem Fall aufrechterhalten bleiben.

In einer alternativen Ausführungsform ist der Schutzschlauch zweiteilig. Insbesondere bei der Verwendung mobiler Zugeinrichtungen kann nicht verhindert werden, daß sich die Zugmaschine nach dem Reißen des Zugmittels vom Zugobjekt schnell weiter entfernt als es die ursprüngliche Länge des Zugmittels vorsieht, weil die Zugmaschine nicht schnell genug abgestoppt werden kann. Durch die Zweiteilung des Schutzschlauchs ist ein Reißen des Schutzschlauchs wirksam verhindert. Durch die Verwendung zweier gleichgroßer Teilschläuche kann die Überlappung der Teilschläuche so dimensioniert sein, daß sich die Teilschläuche über ihre gesamte Länge überlappen. Diese Überlappung über die gesamte Länge ermöglicht einen langen Auseinanderfahrweg der Teilschläuche gegeneinander. Dieser lange Verfahrweg gewährleistet wiederum den Erhalt der Führungseigenschaften des Schutzschlauchs über ein langes Zeitintervall.

In einer weiteren Ausführungsform ist der Schutzschlauch in Längsrichtung auftrennbar. Diese Auftrennungsmöglichkeit in Längsrichtung erleichtert zum einen die Einführung des Zugmittels in den Schutzschlauch. Zum anderen ermöglicht die Auftrennbarkeit ein schnelles Entfernen der Schutzschläuche beispielsweise zu Service- und Revisionszwecken. Schließlich begünstigt die Auftrennbarkeit in Längsrichtung auch das Entfernen eines infolge eines Risses ausgefallenen Zugmittels.

Die Anbringung einer zusätzlichen, beispielsweise aus Kunststoff bestehenden Schutzschicht auf der Innenwand des Schutzschlauchs verlängert dessen Lebensdauer. Der Schutzschlauch ist auf diese Weise über eine lange Zeitdauer einsetzbar. Zudem verkraftet ein derart beschichteter Schutzschlauch auch mehrere Brüche von einliegenden Zugmitteln. Der so beschichtete Schutzschlauch ist also mehrfach wiederverwendbar. Infolge der Wiederverwendbarkeit muß der Schutzschlauch erst nach Ablauf eines längeren Zeitintervalls entsorgt werden, was langfristig den Verbrauch an Schutzschläuchen mindert und auch infolge des verringerten Material- und Entsorgungsbedarfs umweltfreundlich ist.

Bei einer insbesondere für Zugketten geeigneten Ausführungsform des Führungselements ist dieses als in die Kette inkorporiertes Führungsseil ausgestaltet. Dabei kann das Führungsseil als Stahlseil oder in textiler Ausführung ausgestaltet sein. Bei dieser Ausführungsform dienen die einzelnen Kettenglieder als formschlüssige Halteelemente für das Führungsseil. Die Inkorporierung des Führungsseils in die Zugkette bewirkt wiederum einen besonders guten Zusammenhalt zwischen Führungsseil und Zugmittel und begünstigt somit die Führungseigenschaften des Führungsseils beim Zugmittelausfall. Der wellenförmige Verlauf des Führungsseils gewährleistet zudem die Möglichkeit einer Längenausdehnung des Führungsseils beim Zugmittelausfall. Das Führungsseil kann wiederum federelastisch ausgestaltet sein, um infolge der Federelastizität eine zusätzliche Längenausdehnung des Führungsseils beim Zugmittelausfall zu ermöglichen.

Anhand der in den Zeichnungsfiguren dargestellten Ausführungsbeispiele ist die Erfindung mit weiteren wesentlichen Merkmalen und Vorteilen erläutert. Es zeigen:
- Fig. 1: einen aus Zugmaschine und geschlepptem Fahrzeug bestehenden Schleppverband in Seitenansicht,
- Fig. 2: eine Oberansicht des in Fig. 1 dargestellten Zugverbands mit schematisch angedeutetem Zugmittelausfall,
- Fig. 3: ein als geraffter Schutzschlauch mit Falzen ausgestaltetes Führungselement mit einliegendem Zugmittel,
- Fig. 4: einen zweiteiligen Schutzschlauch als Führungselement,
- Fig. 5: eine Teilansicht eines mittels eines Reißverschlusses längsteilbaren Schutzschlauchs,
- Fig. 6: eine Querschnittsansicht eines mittels eines Klettverschlusses längsteilbaren Schutzschlauchs,
- Fig. 7: eine Querschnittsansicht eines Schutzschlauchs mit einer Schutzschicht auf der Schutzschlauchinnenwand,
- Fig. 8: ein als Rundschlinge ausgestaltetes Zugmittel mit gerafftem Schutzschlauch, und
- Fig. 9: ein als Zugkette ausgestaltetes Zugmittel mit inkorporiertem Führungsseil.

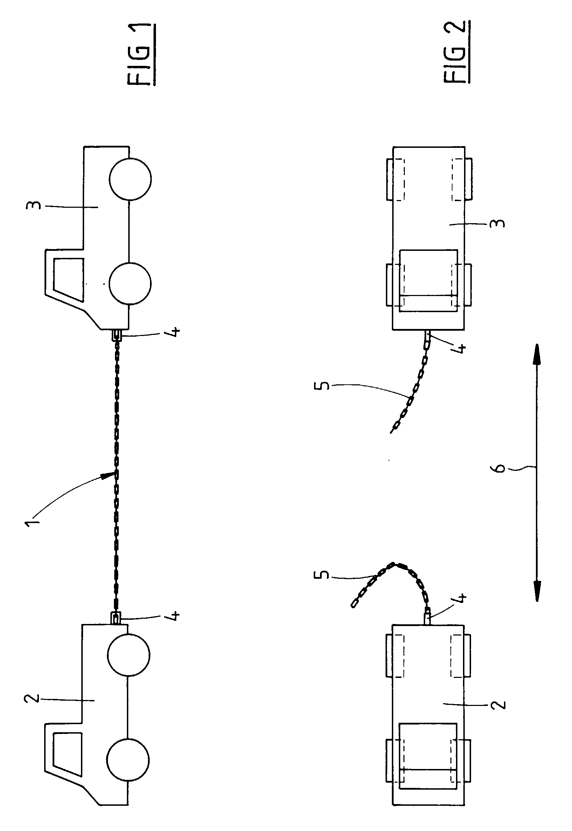

Das Zugmittel 1 ist in der Darstellung der Fig. 1 zwischen der Zugmaschine 2 und dem gezogenen Fahrzeug 3 angeordnet. Die Zugmaschine 2 bildet in diesem Ausführungsbeispiel die Zugeinrichtung. Das Fahrzeug 3 bildet entsprechend das Zugobjekt. Das als Zugseil ausgestaltete Zugmittel ist an sowohl an der Zugmaschine 2 als auch am Fahrzeug 3 adaptierten Zugmittelanschlußteilen 4 befestigt.

Fig. 2 zeigt das Ausschlagen der Zugmittelfragmente 5 in eine der Zugmittellängsrichtung 6 verschiedene Richtung im Falle eines Risses des Zugmittels 1 nach - dem Stand der Technik ohne ein an das Zugmittel angekoppeltes, erfindungsmäßiges Führungselement.

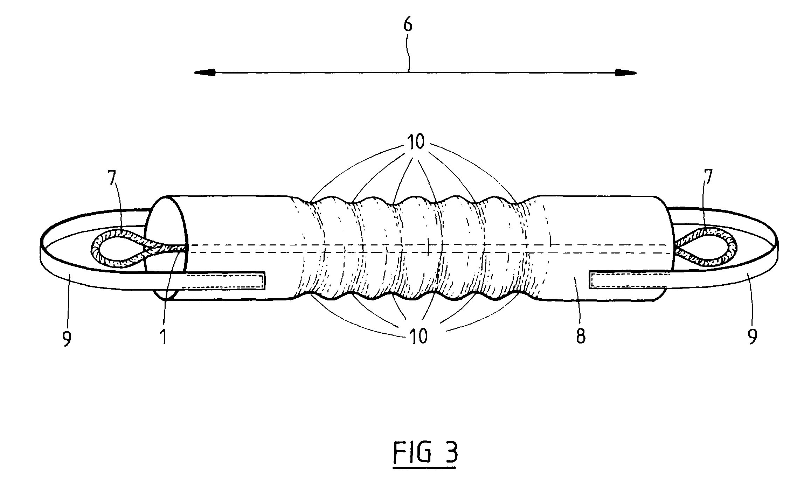

Das im Ausführungsbeispiel gemäß Fig. 3 als Zugseil ausgestaltete Zugmittel 1 weist jeweils endseitig Befestigungsschlaufen 7 zum Anschluß an ein Zugmittelanschlußteil 4 auf. Das im Ausführungsbeispiel gemäß Fig. 3 als Schutzschlauch ausgestaltete Führungselement 8 ist ebenfalls mit Fixierungsschlaufen 9 zum Anschluß an die Zugmittelanschlußteile 4 versehen. Auf diese Weise ist wirksam sichergestellt, daß im Falle des Ausfalls des Zugmittels 1 das Führungselement 8 sicher zwischen der Zugeinrichtung und dem Zugobjekt über die gesamte Zugmittellänge fixiert ist.

Um im Falle des Zugmittelausfalls eine Längenänderung zu ermöglichen, ist das als Schutzschlauch im Ausführungsbeispiel gemäß Fig. 3 ausgestaltete Führungselement 8 zusammengerafft angeordnet. Zum Zusammenraffen des Führungselements 8 ist das Führungselement 8 zumindest in Teilbereichen in Falze 10 gelegt. Beim Zugmittelausfall expandiert das Führungselement 8 in Zugmittellängsrichtung 6 unter Glättung der Falze 10, wodurch die Länge des Führungselements 8 über die ursprüngliche Länge des Zugmittels 1 hinaus verlängert wird.

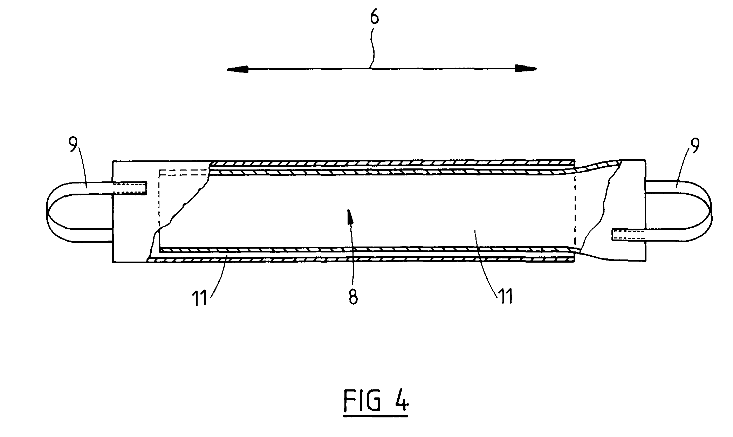

Auch das in Fig. 4 dargestellte Ausführungsbeispiel zeigt wiederum ein als Schutzschlauch ausgestaltetes Führungselement 8. Das dortige Führungselement 8 ist aus zwei in Zugmittellängsrichtung 6 gegeneinander längsverschieblichen Teilschläuchen 11 gebildet. Im Ruhezustand überlappen die Teilschläuche 11 einander in Zugmittellängsrichtung 6 nahezu vollständig. Im Falle des Zugmittelausfalls fahren die Teilschläuche 11 in Zugmittellängsrichtung 6 gewissermaßen auseinander. Hierdurch verringert sich der Überlappungsbereich beider Teilschläuche 11, was eine Längenausdehnung des gesamten Führungselements 8 nach sich zieht.

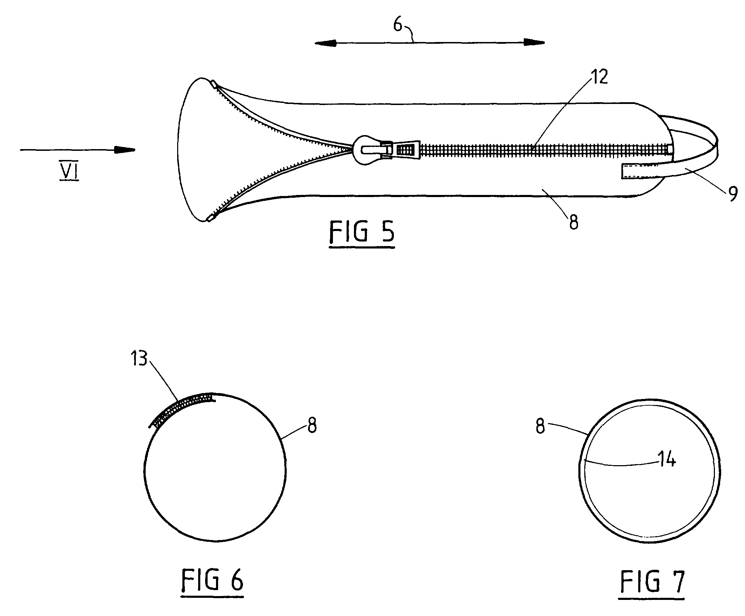

Auch das in Fig. 5 dargestellte Ausführungsbeispiel zeigt wiederum ein als Schutzschlauch ausgebildetes Führungselement 8. Diese Ausführungsart des Führungselements 8 ist mit Hilfe eines in Zugmittellängsrichtung 6 verlaufenden Reißverschlusses 12 längsteilbar. Alternativ dazu zeigt Fig. 6 in Blickrichtung des Pfeiles VI in Fig. 5 gesehen die Querschnittsdarstellung eines ebenfalls als Schutzschlauch ausgestalteten Führungselements 8 mit einem Klettverschluß 13 zur Längsteilbarkeit in Zugmittellängsrichtung 6.

Fig. 7 zeigt die Möglichkeit der Anbringung einer im Ausführungsbeispiel aus Kunststoff bestehenden Schutzschicht 14 auf den Innenwänden des als Schutzschlauch ausgestalteten Führungselements 8.

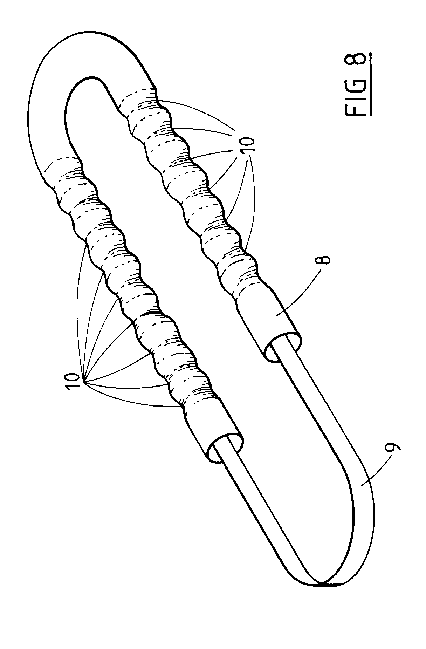

Fig. 8 zeigt ein Führungselement 8, welches als Schutzschlauch für Rundschlingen ausgebildet ist. Auch dieses als Rundschlingenschutzschlauch ausgebildete Führungselement 8 weist wiederum Fixierungsschlaufen 9 auf. Das Führungselement ist bei der Rundschlingenfertigung gleich als zweiter, separater äußerer Schutzschlauch gefertigt. Dieser speziell für den Einsatz von Rundschlingen als Zugmittel 1 gefertigte Schutzschlauch entspricht in seinem konstruktiven Aufbau dem in Fig. 3 dargestellten Ausführungsbeispiel. Der Schutzschlauch weist deshalb wiederum Falze 10 zur Raffung bzw. zur Bildung eines Reservoirs an zusätzlicher Länge auf.

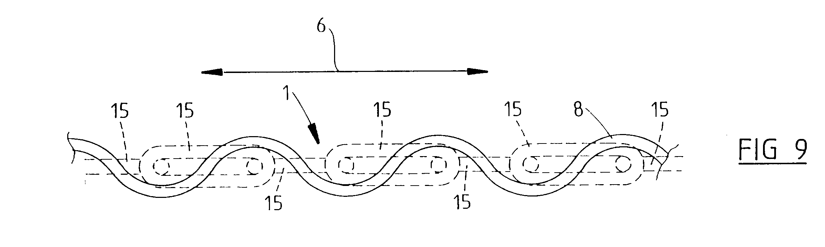

Im Ausführungsbeispiel gemäß Fig. 9 ist das Zugmittel 1 eine aus einer Vielzahl von Kettengliedern 15 zusammengesetzte Zugkette. In die einzelnen Kettenglieder 15 ist wellenförmig integriert das als Führungsseil ausgestaltete Führungselement 8. Infolge seiner Wellenform verfügt das als Zugseil ausgebildete Führungselement 8 über eine größere Länge als das als Zugkette ausgestattete Zugmittel 1.

Die Wirkungsweise der Zugmittel 1 - Führungselement 8 - Kombination ist folgende:
Im Falle eines Ausfalls des Zugmittels 1 ändert das Führungselement 8 in Zugmittellängsrichtung 6 seine Länge derart, daß die Länge des Führungselements 8 die Eigenlänge des Zugmittels 1 erheblich übersteigt. Die am Führungselement 8 weiterhin geführten Zugmittelfragmente 5 werden vom Führungselement 8 sowohl in Zugmittellängsrichtung 6 weitergeführt als auch durch die zwischen Führungselement 8 und Zugmittel 1 erzeugte Reibung abgebremst. Durch dieses Abbremsen wird auch die schlagartig auftretende Spannungsenergie abgebaut.

## Patentansprüche

1. Zugmittel zur Anordnung zwischen einer Zugeinrichtung (2) und einem Zugobjekt (3), mit einem daran angekoppelten und auf eine vergleichsweise größere Länge ausdehnbaren Führungselement (8) als Verletzungsschutz beim Zugmittelausfall,
dadurch gekennzeichnet,
dass sowohl das Zugmittel (1) als auch das Führungselement (8) selbst an Zugmittelanschlußteilen (4) der Zugeinrichtung (2) und/oder des Zugobjektes (3) befestigt ist.

2. Zugmittel nach Anspruch 1,
dadurch gekennzeichnet,
dass das Führungselement (8) ein das Zugmittel (1) umhüllender Schutzschlauch mit Fixierungsschlaufen (9) zum Einhängen an den Zugmittelanschlußteilen (4) ist.

3. Zugmittel nach Anspruch 2,
dadurch gekennzeichnet,
dass der Schutzschlauch zur Verkürzung bei intaktem Zugmittel (1) zumindest teilweise gefalzt ist.

4. Zugmittel nach Anspruch 2,
dadurch gekennzeichnet,
dass der Schutzschlauch aus zwei sich einander überlappenden und gegeneinander längsverschieblichen Teilschläuchen (11) besteht, wobei jeder Teilschlauch (11) an seinem einen Freiende eine Fixierungsschlaufe (9) aufweist zum Einhängen an der Zugeinrichtung (2) bzw. am Zugobjekt (3).

5. Zugmittel nach einem der Ansprüche 2 bis 4,
dadurch gekennzeichnet,
daß der Schutzschlauch (8) in (Zugmittel-)Längsrichtung (6) auftrennbar und auseinanderfaltbar ist.

6. Zugmittel nach Anspruch 5,
gekennzeichnet durch
einen Reißverschluß (12) als Auftrenn- und Verschlußvorrichtung für den Schutzschlauch (8).

7. Zugmittel nach Anspruch 5,
gekennzeichnet durch
einen Klettverschluß (13) als Auftrenn- und Verschlußvorrichtung für den Schutzschlauch (8).

8. Zugmittel nach einem der Ansprüche 2 bis 7,
gekennzeichnet durch
eine vorzugsweise aus Kunststoff bestehende Schutzschicht (14) auf der Innenwand des Schutzschlauchs (8).

9. Zugmittel nach Anspruch 1,
gekennzeichnet durch
eine Zugkette als Zugmittel (1) und ein in die Kette inkorporiertes Führungsseil als Führungselement (8).

10. Zugmittel nach Anspruch 9,
dadurch gekennzeichnet,
daß das Führungsseil (8) ein Stahlseil mit wellenförmigem Verlauf in der Zugkette ist.

11. Zugmittel nach Anspruch 9,
dadurch gekennzeichnet,
daß das Führungsseil (8) ein textiles Seil mit wellenförmigem Verlauf in der Zugkette ist.

12. Zugmittel nach einem der Ansprüche 9 bis 11,
dadurch gekennzeichnet,
daß das Führungsseil (8) aus einem federelastischen Werkstoff besteht.

## Claims

1. Pulling means far arrangement between a pulling device (2) and an object (3) to be pulled, with a guide element (8) which is coupled thereto, can be stretched to a comparatively long length and serves to protect against injury if the pulling means fails, characterized in that both the pulling means (1) and the guide element (8) itself are attached to pulling-means connection parts (4) of the pilling device (2) and/or the object (3) to be pulled.

2. Pulling means according to Claim 1, characterized in that the guide element (8) is a protective hose which surrounds the pulling means (1) and has fixing loops (9) for attachment to the pulling-means connection parts (4).

3. Pulling means according to Claim 2, characterized in that the protective hose is at least partially pleated to shorten it when the pulling means (1) is intact.

4. Pulling means according to Claim 2, characterized in that the protective hose comprises two mutually overlapping component hoses (11) which can be displaced longitudinally relative to one another, each component hose (11) having a fixing loop (9) at one, free, end for attachment to the pulling device (2) or the object (3) to be pulled.

5. Pulling means according to one of Claims 2 to 4, characterized in that the protective hose (8) can be divided and unfolded in the longitudinal direction (6) (of the pulling means).

6. Pulling means according to Claim 5, characterized by a zip fastener (12) as a dividing and fastening device for the protective hose (8).

7. Pulling means according to Claim 5, characterized by a hook and loop fastener (13) as a dividing and fastening device for the protective hose (8).

8. Pulling means according to one of Claims 2 to 7, characterized by a protective layer (14), preferably composed of plastic, on the inner wall of the protective hose (8).

9. Pulling means according to Claim 1, characterized by a pulling chain as the pulling means (1) and a guide rope incorporated into the chain as a guide element (8).

10. Pulling means according to Claim 9, characterized in that the guide rope (8) is a steel rope which runs in a wave pattern through the pulling chain.

11. Pulling means according to Claim 9, characterized in that the guide rope (8) is a textile rope which runs in a wave pattern through the pulling chain.

12. Pulling means according to one of Claims 9 to 11, characterized in that the guide rope (8) is composed of a resilient material.

## Revendications

1. Moyen de traction destiné à être disposé entre un dispositif de traction (2) et un objet tracté (3), comportant un élément de guidage (8) qui est accouplé à ces unités et est extensible jusqu'à une longueur comparativement importante, en tant que système de protection des blessures dans le cas d'une défaillance du moyen de traction,
caractérisé en ce
qu'aussi bien le moyen de traction (1) que l'élément de guidage (8) lui-même sont fixés sur des parties (4) de raccordement du moyen de traction, prévues sur le dispositif de traction (2) et/ou sur l'objet tracté (3).

2. Moyen de traction selon la revendication 1,
caractérisé en ce
que l'élément de guidage (8) est un tuyau de protection, qui enveloppe le moyen de traction (1) et comporte des boucles de fixation (9) pour l'accrochage aux parties (4) de raccordement du moyen de traction.

3. Moyen de traction selon la revendication 2,
caractérisé en ce
que le tuyau de protection est au moins partiellement replié pour son raccourcissement dans le cas où le moyen de traction (1) est intact.

4. Moyen de traction selon la revendication 2,
caractérisé en ce
que le tuyau de protection est constitué de deux tuyaux partiels (11), qui se chevauchent et sont déplaçables longitudinalement l'un par rapport à l'autre, chaque tuyau partiel (11) possédant au niveau de son extrémité libre, une boucle de fixation (9) pour l'accrochage au dispositif de traction (2) ou à l'objet tracté (3).

5. Moyen de traction selon l'une des revendications 2 à 4, caractérisé en ce
que le tuyau de protection (8) peut être séparé et être déplié dans la direction longitudinale (6) (du moyen de traction).

6. Moyen de traction selon la revendication 5,
caractérisé par
une fermeture à glissière (12) en tant que dispositif de séparation et de fermeture pour le tuyau de protection (8).

7. Moyen de traction selon la revendication 5,
caractérisé par
un système de fermeture (13) à bande agrippante en tant que dispositif de séparation et de fermeture pour le tuyau de protection (8).

8. Moyen de traction selon l'une des revendications 2 à 7, caractérisé par
une couche de protection (14) réalisée de préférence en matière plastique et disposée sur la paroi intérieure du tuyau de protection (8).

9. Moyen de traction selon la revendication 1,
caractérisé par
une chaîne de traction en tant que moyen de traction (1) et un câble de guidage, incorporé dans la chaîne, en tant qu'élément de guidage (8).

10. Moyen de traction selon la revendication 9,
caractérisé en ce
que le câble de guidage (8) est un câble en acier possédant une forme ondulée, dans la chaîne de traction.

11. Moyen de traction selon la revendication 9,
caractérisé en ce
que le câble de guidage (8) est un câble textile possédant une forme ondulée, dans la chaîne de traction.

12. Moyen de traction selon l'une des revendications 9 à 11, caractérisé en ce
que le câble de guidage (8) est réalisé en un matériau présentant l'élasticité d'un ressort.
